# EUROPEAN PATENT APPLICATION

(11) **EP 0 571 681 A1**
(43) Date of publication of application: **01.12.1993**
(21) Application number: 92403146.1
(22) Date of filing: 23.11.1992
(51) Int. Cl.: G02F 1/1337

(54) **A method of forming a film for use in alignment of liquid crystal**

(30) Priority: 27.05.1992 JP 135397/92; 20.07.1992 JP 192533/92
(71) Applicant: GTC CORPORATION, Chuo-ku, Tokyo (JP)
(72) Inventor: Fujii, Hiroyuki, c/o GTC Corporation, Tokyo (JP); Murakami, Mikio, c/o GTC Corporation, Tokyo (JP); Nozawa, Fumie, c/o GTC Corporation, Tokyo (JP)
(74) Representative: Fort, Jacques

(57) **Abstract**

The present invention relates to a method for forming a polymer alignment film possessing high grade liquid crystal alignment capabilities for use in liquid crystal display devices, wherein high quality liquid crystal display devices having a high contrast can be obtained.

Further, a method is disclosed for forming a polymer alignment film (2) for use in alignment of liquid crystal by means of adhering a previously aligned second substrate (4) onto a first substrate (1) using pressure, followed by heating and cooling.

Additionally, a method is disclosed for forming a polymer alignment film for use in alignment of liquid crystal which endows a first substrate polymer with liquid crystal alignment capabilities by means of adhering a previously aligned second substrate to a first substrate onto which a polymer film is formed.

## Description

### BACKGROUND OF THE INVENTION

### Field of the Invention

The present invention relates to a method for forming a polymer film for use in alignment of liquid crystal in a liquid crystal display device.

### Relevant Art

In the past, films for use in alignment of liquid crystal in a liquid crystal display device was obtained by first forming polyimide or polyamide crystalline polymer film by spin coating method, printing method, dip coating method or the like, and then following hardening, processing this film by rubbing it in one direction with a cloth such as nylon, rayon, and the like.

However, in the above mentioned rubbing process, there exists a problem in that dust is created as a result of rubbing the film surface with nylon cloth, and the like. This dust that is created not only changes the thickness of the cell and lowers the yield, but it also remains inside the cell as an impurity, causing the reliability to be lowered.

As a result, various experiments have been attempted to replace this rubbing process: the Langmuir-Blodgett (LB) Method is a representative example of one of these experiments. In this method a solution incorporating surface-active agents such as soap is dropped onto the surface of water, forming a monomolecular layer, which is then transferred onto the surface of a substrate. In Japanese Patent Application First Publication Sho 62-209415, a technique is disclosed in which an LB film of polyimide, is used in a liquid crystal alignment film. However, a large amount of time is required to control the alignment, thus this technique is not practical.

Additionally, it is known that alignment of a liquid crystalline polymer is easily carried out by means of the external energy which can make the polymer to be in the liquid crystal state. So the liquid crystalline polymer film is anticipated to be an alignment film that does not require rubbing,and various investigations are performed. For example, Japanese Patent Application First Publication Sho 61-42618 discloses an alignment method which uses a magnetic field, while Japanese Patent Application First Publication Hei 2-123331 discloses an method which carries out alignment by means of processing a liquid crystalline polymer thin film using shearing stress.

However, in the case when the substrate becomes larger, the execution of the above mentioned alignment method which uses a magnetic field is difficult to perform, because an extremely large magnetic field, as well as a great amount of time is required. Additionally, in the processing method which utilizes shearing stress, a precise driving portion is required at the time of applying the shearing stress, leading to increased cost of the apparatus. Furthermore, inconveniences such as damage to the surface by the shearing causing a reduction of the display quality also exist.

### SUMMARY OF THE PRESENT INVENTION

In the present invention, a method for forming a film for use in alignment of liquid crystal which allows a first substrate to possess liquid crystal alignment capabilities, is supplied, wherein a second substrate covered with a polymer film which is already aligned is adhered to a first substrate by applying pressure, after which it is heated and then cooled. Also supplied in the present invention is a method for forming a film for use in alignment of liquid crystal which endows a first substrate with liquid crystal alignment capabilities, by means of adhered, using pressure, a previously aligned second substrate's surface to the surface of a polymer film formed on a first substrate, after which it is heated and then cooled.

By means of this method, possession of liquid crystal alignment capabilities is possible, and as a result, rubbing of the film surface, as in the prior art rubbing process, as well as application of a shearing force do not required. Consequently, damage to the film surface and creation of dust do not occur. Additionally, there is no need for large equipment since application of a magnetic field is not necessary. Furthermore, the aligned second substrate can be repeatedly used a number of times, and is thus industrially advantageous as well.

In this manner, the method for forming a film for use in alignment of liquid crystal of the present invention solves various problems in the prior art, and a novel high grade film for use in alignment of liquid crystal possessing liquid crystal alignment capabilities can be obtained. By using a film for use in alignment of liquid crystal formed according to this method, a high grade liquid crystal display device with a high contrast can be obtained.

### BRIEF DESCRIPTION OF THE DRAWINGS

Figure 1 is a vertical cross sectional view of a first substrate coated with a polymer film used in the method of the present invention.

Figure 2 is a vertical cross sectional view of a second substrate coated with polymer film used in the method of the present invention.

Figure 3 is a vertical cross sectional view of the first and second substrates adhered together at their surfaces.

Figure 4 is a vertical cross sectional view of a substrate to which an aligned first polymer film is adhered.

Figure 5 is a side view of an apparatus in which alignment processing is performed using a roller.

Figure 6 shows an in plane distributional view of the anisotropy of optical property of a liquid crystalline polymer film before processing according to the present invention.

Figure 7 shows an in plane distributional view of the anisotropy of optical property of an aligned liquid crystalline polymer film after processing.

Figure 8 shows an in plane distributional view of the anisotropy of optical property of a polyimide rubbing film for adhering to a liquid crystalline polymer film.

### DETAILED DESCRIPTION OF THE PRESENT INVENTION

In the method for forming an film for use in alignment of liquid crystal of the present invention, a first substrate or a polymer film formed on a surface of the first substrate are endowed with liquid crystal alignment capabilities by means of adhered using pressure a first substrate or a polymer film formed on a surface of a first substrate, to a second substrate which has already been aligned, heating and then cooling.

In the following a detailed description of the present invention will be given.

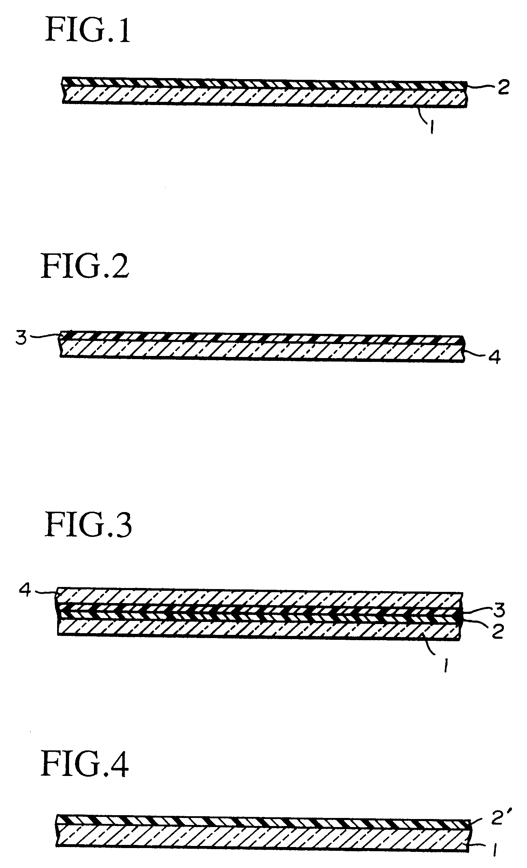

Concretely, in the alignment method according to the present invention, as shown in figure 1, a first substrate 1 (for example a glass or plastic substrate) is prepared. On a surface of this first substrate, a first polymer thin film 2 is formed by coating of a polymer dilute solution using a conventional method such as spin coating, roll coating, offset printing, or dip coating, followed by removal of the solvent by heating.

Not only is this type of polymer thin film 2 formed onto the surface of the first substrate 1, but also alignment capabilities can be endowed upon first substrate 1 by, for example, using a glass substrate coated with a transparent electrode film, add to this surface, directly performing a heating process (explained hereinafter), followed by transferring the aligned surface layer of the polymer film which has been aligned on the second substrate.

In the present invention, as the polymer to be formed on the first substrate 1, polyimides, as well as liquid crystalline polymers displaying liquid crystallinity at a temperature of 150°C or more can be listed. As the liquid crystalline polymer there can be listed, all kind of aromatic polyesters or polyesters which has an alkyl chain between aromatic rings (for example, X7G: produced by Eastman Kodak Co.Ltd.), polyester amide, aromatic polyamide, and vinyl polymers such as polyacrylic acid and the like.

Additionally, as shown in figure 2, a second substrate 4 to be formed from glass or plastic onto which a second polymer thin film 3 is formed, is prepared. And the surface of the second polymer film 3 is aligned by means of rubbing process. This second substrate 4 is then contacted to the first substrate 1 with face to face as shown in figure 3.

This pair of contacted substrates 1,4 is then placed in an oven or the like and heated. The heating time ranges from 10 minutes to 1 hour, but is preferably about 30 minutes. Applying a load during a heating process improves the adherence between the first substrate and the second polymer film. After the heating process, the substrates in the adhered state are cooled to room temperature, following which first substrate 1 and second substrate 4 are separated. From these operations, the first polymer thin film 2' on the first substrate is endowed with liquid crystal alignment capabilities.

Two of the first substrates 1 obtained in the above described manner are then joined facing each other, with a spacer inserted in between for uniform thickness. Liquid crystal is then filled into this space, and a liquid crystal display device is obtained.

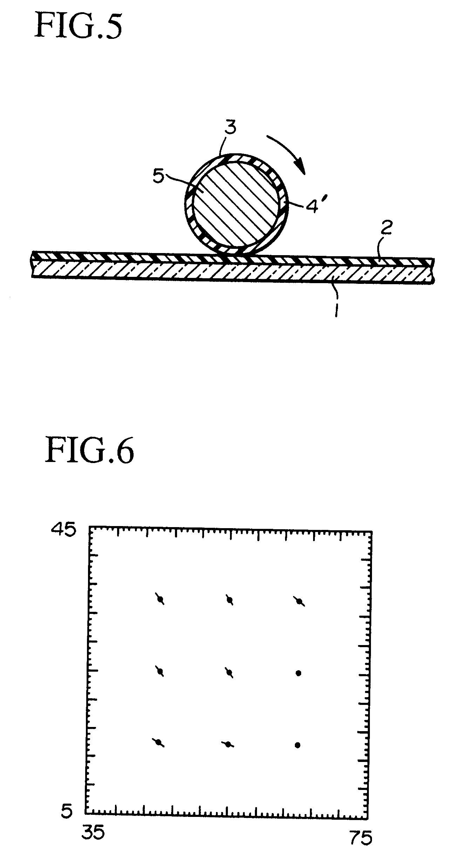

In the above description as the substrate 4 onto which a second polymer thin film is formed, a flat planar-shaped material was used, however, the substrate is not restricted to just a flat planar-shaped material as use of a roller 5 wrapped around a plastic sheet 4' onto which second polymer thin film 3 is formed as shown in figure 5, is also possible. Additionally, the material aligned by the stretching of the polymer film can also be used as the second polymer thin film 3.

In addition, as the previously aligned film, even if a vapor deposition film of SiO formed on a glass substrate or the like, or a material with a one-directional microgrooves formed on a surface of a glass substrate or the like, is used as second substrate 4. In the case of using the material with microgrooves, the second substrate 4' itself can still operate as the aligned film.

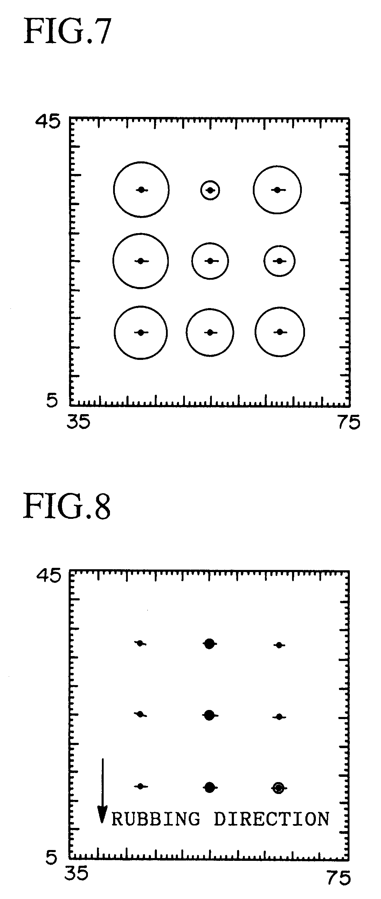

In the method of the present invention, the reason for the first polymer film on the first substrate possessing liquid crystal alignment capabilities is conjectured in the following. Namely, a first substrate is placed into contact with an already aligned second polymer film, and by means of heat processing, a surface layer of the second polymer film is transferred to the first substrate. As a result, the first substrate comes to possess (be endowed with) liquid crystal alignment capabilities. Additionally, in the case when a polymer film is formed on a first substrate, the first polymer film is softened by means of heat processing, and by placing a previously aligned second film into contact with the first polymer film, the surface shape of the second substrate is transferred. As well, forming a shape necessary for liquid crystal alignment on a film that has not been previously aligned can also be considered. In particular, in the case when a liquid crystalline polymer is used, when placing it into contact with an aligned face at temperature in which the polymer shows liquid crystallinity, not only can the surface shape be obtained, but alignment of the polymer can be obtained as well. From the results of the measurement the birefringence of the liquid crystalline polymer alignment film formed according to the method mentioned above, it is confirmed that alignment direction of the processed liquid crystalline polymer film is the same to that of polyimide rubbing film adhered to the first polymer film. Figures 6 to 8 show in plane distributional views of the anisotropy of optical property: respectively, figure 6 shows the data of the first polymer film before processing, figure 7 shows the data of the first polymer film after processing, and figure 8 shows the data of the polyimide rubbing film (second polymer film) adhered using pressure to the first polymer film. In these figures 6 to 8, the orientation of the line segments corresponds to the phase advancing axis, and the size of the circles corresponds to the size of the anisotropies. The measured wavelength was 632.8 nm.

In the following, present invention will be explained concretely using examples and comparative examples.

### Example 1

Two glass substrates coated with transparent electrode film were prepared; one was designated as the first substrate, while the other as the second substrate.

A polymer alignment film was formed on the second substrate; in this case, a polyimide-containing alignment raw material AL-1051 (produced by Japan Synthetic Rubber Co.Ltd.) was used. This was then coated onto a glass substrate using a spinner at 1500 rpm, 30 seconds after which drying was performed at 180°C for 1 hour, and a polymer film having a thickness of approximately 100 nm was obtained. Following this, a rubbing process was performed in one direction using a nylon cloth, and the surface polymer chain was aligned.

These substrates were then adhered together, and further heat processed at 200°C for 1 hour, while applying pressure at 50 g/cm². Following this, the substrates in the adhered state were cooled to room temperature, application of pressure was ceased, and the two substrates were then separated.

Two of the first substrates obtained in the above manner were then used to manufacture a twisted nematic (TN) cell, and an excellent alignment was obtained after the nematic liquid crystal GT-5001 (produced by Chisso Co.Ltd.) was filled.

### Example 2

As the first polymer a liquid crystalline main chain type aromatic polyester was used. This polymer is a liquid crystalline polymer which displays a liquid crystallinity at approximately 200°C. A solution of N-methylpyrrolidone containing 2% by weight of this polymer was prepared, and then coated onto a glass substrate coated with transparent electrode film using a spinner at 1500 rpm, 30 seconds after which drying was performed at 180°C for 1 hour, and a liquid crystalline polymer film having a thickness of approximately 100 nm was obtained.

Additionally, a second polymer alignment film was formed on the other substrate; in this case, a polyimide-containing alignment raw material AL-1051 (produced by Japan Synthetic Rubber Co.Ltd.) was used. This was then coated onto a glass substrate using a spinner at 1500 rpm, 30 seconds after which drying was performed at 180°C for 1 hour, and a polymer film having a thickness of approximately 100 nm was obtained. Following this, a rubbing process was performed in one direction using a nylon cloth, and the surface polymer chain was aligned.

The film surfaces of the aforementioned first and and second substrates were then adhered together, and further heat processed at 200°C for 1 hour, while applying pressure at 50 g/cm². Following this, the substrates while in the adhered state were cooled to room temperature, application of pressure was ceased, and the two substrates were then separated.

At the time of measuring the birefringence of the crystalline polymer of the substrate using ADR100XY (manufactured by ORC Manufacturing Co.Ltd.), a phase difference of 10 nm (measured wavelength = 632.8 nm) was observed. Additionally, the orientation of the phase advancing axis was the same as that of the rubbing polyimide substrate (perpendicular to the rubbing direction).

Two of the first substrates obtained in the above manner were then used to manufacture a TN cell, and an excellent alignment was obtained after the nematic liquid crystal GT-5001 (produced by Chisso Co.Ltd.) was filled.

### Example 3

The first polymer film was formed by using a liquid crystalline polymer as in example 2. As the second polymer, a polyimide-containing alignment raw material AL-1051 (produced by Japan Synthetic Rubber Co.Ltd.) was coated onto a polyimide sheet (Ube Kosan Co.Ltd.) using a spinner at 1500 rpm, 30 seconds after which drying was performed at 180°C for 1 hour, and a polymer film having a thickness of approximately 100 nm was obtained. Following this, a rubbing process was performed in one direction using a nylon cloth, and the surface polymer chain was aligned.

A roller wrapped around by this sheet was then placed in contact, heated at 200°C, and moved over the first substrate at a rate of 1 cm/min.

At the time of measuring the birefringence of the crystalline polymer of the substrate using ADR100XY (manufactured by ORC Manufacturing Co.Ltd.), a phase difference of 10 nm (measured wavelength = 632.8 nm) was observed. Additionally, the orientation of the phase advancing axis was perpendicular to the direction of rubbing.

Two of the first substrates obtained in the above manner were then used to manufacture a TN cell, and an excellent alignment was obtained after the nematic liquid crystal GT-5001 (produced by Chisso Co.Ltd.) was filled.

### Example 4

A polyimide-containing alignment raw material AL-1051 (produced by Japan Synthetic Rubber Co.Ltd.) was used in place of the crystalline polymer. This was then coated onto a glass substrate using a spinner at 1500 rpm, 30 seconds after which drying was performed at 180°C for 1 hour, and a polymer film having a thickness of approximately 100 nm was obtained. Following this, on just one side of the substrate, a rubbing process was performed in one direction using a nylon cloth, and the surface polymer chain was aligned.

These films were then adhered, and further heat processed at 200 °C for 1 hour while applying pressure at 50 g/cm². Following this, the substrates while in the adhered state were cooled to room temperature, application of pressure was ceased, and the two substrates were then separated.

Two of the first substrates obtained in the above manner were then used to manufacture a TN cell, and an excellent alignment was obtained after the nematic liquid crystal GT-5001 (produced by Chisso) was poured.

### Example 5

As the first polymer a liquid crystalline main chain type aromatic polyester was used. This polymer is a liquid crystalline polymer which displays a liquid crystallinity at approximately 200°C. A solution of N-methylpyrrolidone containing 2% by weight of this polymer was prepared, and then coated onto a onto a glass substrate covered with transparent electrode film using a spinner at 1500 rpm, 30 seconds after which drying was performed at 180°C for 1 hour, and a liquid crystalline polymer film having a thickness of approximately 100 nm was obtained. (First substrate)

As the second substrate, a soda glass substrate on which a microgroove is formed in one direction by means of photolithography was used. From observing the surface shape through a scanning interatomic force microscope, the following structure were confirmed: a pitch of 100 nm, a groove width of 500 nm, and a groove depth of 50 nm.

These substrates were then adhered, and further heat processed at 200 °C for 1 hour while applying pressure at 50 g/cm². Following this, the substrates while in the adhered state were cooled to room temperature, application of pressure was ceased, and the two substrates were then separated.

Two of the first substrates obtained in the above manner (First substrate) were then used to manufacture a TN cell, and an excellent alignment was obtained after the nematic liquid crystal GT-5001 (produced by Chisso Co.Ltd) was poured.

### Example 6

A first polymer film was formed by using a liquid crystalline polymer as in example 5. As the second substrate, a roller wrapped around by a stainless steel foil with microgrooves formed on the surface in one direction was used. The roller was then placed in contact, heated at 200°C, and moved over the first substrate at a rate of 1 cm/min.

Two of the first substrates obtained in the above manner (First substrate) were then used to manufacture a TN cell, and an excellent alignment was obtained after the nematic liquid crystal GT-5001 (produced by Chisso Co.Ltd.) was poured.

### Comparative Example 1

As the first polymer, a liquid crystalline polymer raw material as in example 2 was used. A solution of N-methylpyrrolidone containing 2% by weight of this polymer was prepared, and then coated onto a glass substrate covered with transparent electrode film using a spinner at 1500 rpm, 30 seconds after which drying was performed at 180°C for 1 hour, and a liquid crystalline polymer film having a thickness of approximately 100 nm was obtained.

The second substrate was formed as in example 1 using a polyimide-containing alignment raw material AL-1051 (produced by Japan Synthetic Rubber Co.Ltd.). This was then coated onto a glass substrate using a spinner at 1500 rpm, 30 seconds after which drying was performed at 180°C for 1 hour, and a polymer film having a thickness of approximately 100 nm was obtained. Following this, a rubbing process was performed in one direction using a nylon cloth, and the surface polymer chain was aligned.

These substrate surfaces were then adhered, and allowed to sit at room temperature without heating for 1 hour while applying pressure at 50 g/cm². Following this, the two substrates were separated.

At the time of measuring the birefringence of the crystalline polymer of the first substrate using ADR100XY (manufactured by ORC Manufacturing Co.Ltd.), a phase difference was not observed.

Two of the first substrates obtained in the above manner were then used to manufacture a TN cell, however liquid crystal alignment was not obtained after the nematic liquid crystal GT-5001 (produced by Chisso Co.Ltd.) was filled.

### Comparative Example 2

Both first and second substrates were prepared using the same materials as in example 5.

These substrate's surfaces were then adhered and allowed to sit at room temperature for 1 hour while applying pressure at 50 g/cm². Following this, the two substrates were separated.

Two of the first substrates obtained in the above manner were then used to manufacture a TN cell, however liquid crystal alignment was not obtained after the nematic liquid crystal GT-5001 (produced by Chisso Co.Ltd.) was poured.

## Claims

1. A method of forming a film for use in alignment of liquid crystal, wherein a first substrate is endowed with liquid crystal alignment capabilities by means of adhering a second substrate covered with a previously aligned polymer film to a surface of said first substrate, followed by heating and cooling.

2. A method of forming a film for use in alignment of liquid crystal according to claim 1 wherein a polymer film is formed on a first substrate, and endowed with liquid crystal alignment capabilities.

3. A method of forming a film for use in alignment of liquid crystal according to one of claims 1 and 2, wherein a second substrate is a heatable roller covered with a previously aligned polymer film.

4. A method of forming a film for use in alignment of liquid crystal according to one of claims 2 and 3, wherein a polymer film of a first substrate is comprised of a liquid crystalline polymer, which is aligned by means of heating said first polymer beyond its transition temperature, followed by cooling.

5. A method of forming a film for use in alignment of liquid crystal, wherein said first substrate polymer film is endowed with liquid crystal alignment capabilities by means of adhering, using pressure, a previously aligned second substrate to a first substrate onto which is formed a polymer film, followed by heating and cooling.

6. A method of forming a film for use in alignment of liquid crystal according to claim 5, wherein a previously aligned second substrate is formed on the surface of a heatable roller.

7. A method of forming a film for use in alignment of liquid crystal according to one of claims 5 and 6, wherein a second substrate is aligned by means of forming microgrooves in one direction.
